# EUROPEAN PATENT SPECIFICATION

(11) **EP 0 833 572 B1**
(45) Date of publication and mention of the grant of the patent: **02.01.2003**
(21) Application number: 96918977.8
(22) Date of filing: 14.06.1996
(51) Int. Cl.: A23L 3/22, A23C 3/02

(54) **AN APPARATUS AND A METHOD FOR THE HEAT TREATMENT OF A FLOW OF PUMPABLE FOOD PRODUCT**
EIN GERÄT UND EINE METHODE ZUR WÄRMEBEHANDLUNG EINES STROMES AUS PUMPBAREN LEBENSMITTELERZEUGNISSEN
APPAREIL ET PROCEDE DE TRAITEMENT THERMIQUE D'UN FLUX DE DENREE ALIMENTAIRE POMPABLE

(30) Priority: 15.06.1995 SE 9502188
(43) Date of publication of application: 08.04.1998
(73) Proprietor: Tetra Laval Holdings & Finance SA, 1009 Pully (CH)
(72) Inventor: PALM, Bengt, S-240 13 Genarp (SE); ARPH, Sten-Olof, S-226 47 Lund (SE)
(74) Representative: Müller, Hans-Jürgen, Dipl.-Ing.
(86) International application number: SE9600781
(87) International publication number: WO97000025

(56) References cited:
- EP-A- 0 118 134
- WO-A-93/05667
- WO-A-94/09652
- DE-C- 4 025 570
- SE-B- 461 566

## Description

### TECHNICAL FIELD

The present invention relates to an apparatus for the heat treatment of a flow of pumpable food product and a method for continuously heat treating a pumpable food product according to claims 1 and 5.

### BACKGROUND ART

In the heat treatment of a food product for the purposes of achieving, for example, the pasteurization or sterilization of the product, the food product is heated to a predetermined temperature and is held at that temperature for a given time. If the stay time at the disclosed temperature is too short, the desired effect will not be achieved - in pasteurization the destruction of all pathogenic micro-organisms. If the stay time is overly long, there is a risk of affecting the various substances included in the food product, which may alter their flavour or aroma.
An apparatus for such heat treatment comprises one or more units for preheating and heating the food product to a predetermined temperature, and a buffer pipe through which the food product passes and in which this temperature is maintained for a predetermined time, together with one or more coolers. The buffer pipe normally consists of a pipe coil of a given length. The length of the pipe coil then corresponds to treatment of a given product at a given calculated capacity of the heat treatment apparatus. The flow rate through the apparatus - and thereby through the buffer pipe - normally depends upon the performance of the heating unit and the coolers and is, thereby, relatively constant.

EP 0 118 134 A1 discloses an apparatus for the heat treatment of food products, comprising several units for preheating and one unit for high-heating the food product to a predetermined temperature and one or more units to cool the food product. Such apparatus incorporates the possibility to activate or partially deactivate said units for preheating and cooling of the food product, depending on the flow rate of the food product.

### SUMMARY OF THE INVENTION

According to the present invention, there is now proposed an apparatus for the heat treatment of food products which may readily be adapted to different requirements in the form of stay times at desired elevated temperature. The apparatus according to the invention is substantially characterized in that the buffer pipe is designed such that its length may be modified in that at least a portion of the buffer pipe is of such construction that it may operate either as a buffer pipe or as a cooler. With such a construction, the stay time may be adapted, on the one hand to changes in the product composition, and, on the other hand, to modified flows of the food product.

The apparatus is advantageously designed such that the above described portion of the buffer pipe is adjacent to or is surrounded by a space which may be connected to a coolant. As was mentioned above, the buffer pipe normally consists of a pipe coil, but it is also conceivable to utilise instead a helically wound pipe of optional cross section, or to utilise a plate apparatus of the plate heat exchanger type, specifically constructed for this purpose. Depending upon the design and construction selected, the cooling surface facing the buffer pipe will be of varying configuration.

However, the buffer pipe preferably consists in a first portion of a pipe coil of cylindrical configuration and, in a section portion of the buffer pipe seen in the flow direction, the above-described space consists of one or more sections of double-jacketed pipes, these sections being capable, when necessary, of acting as coolers. These sections are suitably designed such that they may be connected stepwise and in series to the coolant.

Temperature sensors, or guards, for sensing the temperature of the food product are provided at the end of the above-disclosed pipe coil and between the above-described sections.

The method for continuous heat treatment of a pumpable food product according to the present invention is substantially characterized in that the stay time in the buffer pipe for the food product at the predetermined temperature is modifiable during one operation period. In the method according to the present invention, both the thermal load and the bacteriological effect may thus remain unchanged if an intentional modification or an unforeseen disruption were to occur.

In the method according to the present invention, the stay time may be modified by an increase or reduction thereof if the flow of food product increases or decreases while an operational period is in progress. If the flow of food product is adjustable between one or more capacities, the stay time will consequently also be modified stepwise in that one or more cooling stages are brought into operation.

The method according to the present invention may also be utilized by an adaptation of the stay time to suit the consistency or particle content of the food product at a given flow rate capacity.

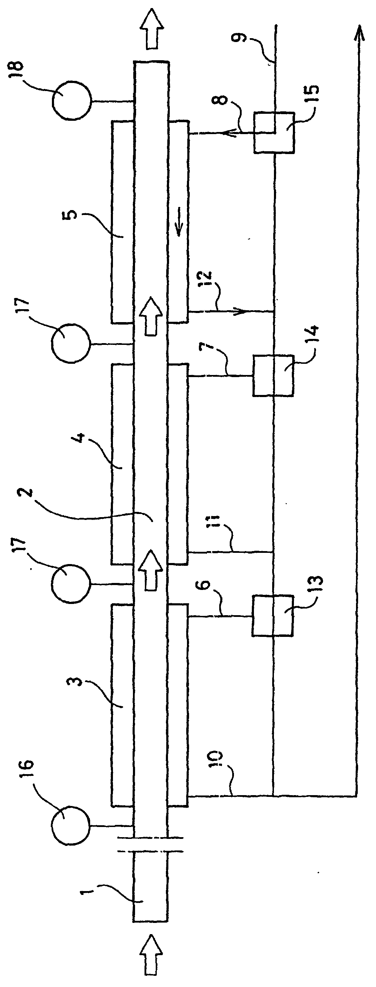

### BRIEF DESCRIPTION OF THE ACCOMPANYING DRAWING

The apparatus according to the present invention will now be described in greater detail hereinbelow, with particular reference to the accompanying Drawing which shows one embodiment of the apparatus chosen by way of example.

### DESCRIPTION OF PREFERRED EMBODIMENT

The Drawing shows a portion 1 of a tubular buffer pipe according to the present invention. In the second portion 2 seen in the flow direction, the buffer pipe consists of sections 3,4 and 5 of double-jacketed piping. These sections are provided with valved connections 6,7 and 8 to a coolant circuit 9. The cooling side of each section 3, 4 and 5 is in communication with the coolant circuit 9 by the intermediary of outlets 10, 11 and 12. Three-way valves 13, 14 and 15 are provided at the inlets 6, 7 and 8 to the sections 3, 4 and 5. At the end of the first portion 1 of the buffer pipe, there is disposed a temperature sensor or guard 16 which senses the temperature of the product. There is also a temperature guard disposed between the sections 3, 4 and 5.

The apparatus shown on the Drawing functions as follows.

Food product which is heated to the desired temperature passes the first portion 1 of the buffer pipe. If the longest possible stay time is to be achieved, the food product passes further through the inner pipe in sections 3, 4 and 5, and the communication pipes between them, and further to a cooler (not shown) disposed after the buffer pipe.

If a slightly shorter stay time is desired, coolant is led from the coolant circuit 9 into the coolant section 5 through the valve 8 and the connection 10 and departs from the coolant section through the connection outlet 10. The product which, in the case described earlier, is not cooled until in the cooler (not shown), is now cooled already in the last portion of the buffer pipe, and the stay time at the predetermined temperature is shortened somewhat.

In a manner corresponding to that described above, sections 3 and 4 may be activated in that coolant is caused to pass the coolant section 4 through the valve 13, connections 7 and 10, and the coolant section 3 via the valve 12 and connections 6 and 9. The earlier the product is cooled, the shorter the stay time will be. The temperature is monitored by means of the temperature sensors or guards 16-18.

As coolant in the buffer pipe, use may be made of the coolant which is employed in the indirectly acting heat exchanger connected after the buffer pipe.

An apparatus of the type shown in the Drawing may, for example, be employed in the high temperature treatment or pasteurization of milk in connection with filling into packages. Should any of the filling machines break down for one reason or another, the milk flow may be reduced and the stay time adapted to the new, reduced flow. In the embodiment shown on the Drawing, the buffer pipe is switchable between capacities 1 to 4. Naturally, the number of steps may vary.

An apparatus of the type described in the foregoing may also advantageously be employed in the heat treatment of food products of high viscosity or containing particles. In such a practical application, the possibility of being able to customise stay time in an existing installation may of major value.

## Claims

1. An apparatus for the heat treatment of a flow of pumpable food product, comprising
one or more units for preheating and heating of the food product to a predetermined temperature,
a buffer pipe through which the food product passes and in which the predetermined temperature is maintained during a predetermined stay time, and
one or more coolers,
**characterized in that,**
at least a portion (2) of said buffer pipe is adjacent to or is surrounded by a space and that said space is connectable to a coolant (9), whereby said at least one second portion (2) of said buffer pipe is switchable to either as a buffer pipe or as a cooler.

2. The apparatus as claimed in claim 1,
**characterized in that**,
said portion (2) of said buffer pipe consists of at least one section (3, 4, 5) of double-jacketed cylindrical piping which is connectable to a coolant (9).

3. The apparatus as claimed in claim 2,
**characterized in that**,
said sections (3, 4, 5) of said buffer pipe are designed to be able to be connected stepwise and in series to the coolant (9).

4. The apparatus as claimed in claim 1,
**characterized in that**,
a first portion (1) of said buffer pipe consists of a cylindrical pipe coil, and that
temperature sensors (16, 17, 18) are provided for sensing the temperature at the end of said first portion (1) and between each respective section (3, 4, 5).

5. A method for the continuous heat treatment of a flow of pumpable food product, comprising the steps of
preheating and heating of the food product to a predetermined temperature,
maintaining said predetermined temperature during a predetermined stay time within a buffer pipe, and
thereafter cooling of the food product,
**characterized in that,**
said stay time is controlled by bringing at least a portion (2) of said buffer pipe adjacent to a space (3, 4, 5) which is connectable to a coolant (9), into operation of one or more cooling stages.

6. The method as claimed in claim 5,
**characterized in that**,
switching the flow of said food product during an operational period between one or more capacities.

7. The method as claimed in one of the claims 5 to 7,
**characterized in that**,
adapting the stay time in the buffer pipe to the consistency or particle content of the food product at a given flow capacity.

## Patentansprüche

1. Vorrichtung zur Wärmebehandlung eines Stroms eines pumpfähigen Lebensmittelprodukts, welche folgendes aufweist:
eine oder mehrere Einheiten zum Vorwärmen und Erwärmen des Lebensmittelprodukts auf eine vorgegebene Temperatur,
ein Pufferrohr, durch welches das Lebensmittelprodukt strömt und in welchem die vorgegebene Temperatur über eine vorgegebene Verweildauer hinweg aufrecht erhalten wird, und
einen oder mehrere Kühler,
**dadurch gekennzeichnet,**
**dass** mindestens ein Abschnitt (2) des Pufferrohres einem freien Raum benachbart oder von diesem umgeben ist, und dass der freie Raum an ein Kühlmittel (9) anschließbar ist, wodurch zu diesem mindestens einen zweiten Abschnitt (2) des Pufferrohres als Pufferrohr oder als Kühler umgeschaltet werden kann.

2. Vorrichtung nach Anspruch 1,
**dadurch gekennzeichnet,**
**dass** der Abschnitt (2) des Pufferrohres aus mindestens einem Teil (3, 4, 5) einer zylindrischen Rohrleitung mit Doppelmantel besteht, welche an ein Kühlmittel (9) anschließbar ist.

3. Vorrichtung nach Anspruch 2,
**dadurch gekennzeichnet,**
**dass** die Teile (3, 4, 5) des Pufferrohres so ausgelegt sind, dass sie schrittweise und hintereinander an das Kühlmittel (9) anschließbar sind.

4. Vorrichtung nach Anspruch 1,
**dadurch gekennzeichnet,**
**dass** ein erster Abschnitt (1) des Pufferrohres aus einer zylindrischen Rohrschlange besteht, und
**dass** zum Erfassen der Temperatur am Ende des ersten Abschnitts (1) und zwischen den jeweiligen Teilen (3, 4, 5) Temperaturfühler (16, 17, 18) vorgesehen sind.

5. Verfahren zur kontinuierlichen Wärmebehandlung eines Stroms eines pumpfähigen Lebensmittelprodukts, welches die folgenden Schritte umfasst:
Vorwärmen und Erwärmen des Lebensmittelprodukts auf eine vorgegebene Temperatur,
Halten der vorgegebenen Temperatur über eine vorgegebene Verweildauer hinweg innerhalb eines Pufferrohres, und
anschließendes Kühlen des Lebensmittelprodukts,
**dadurch gekennzeichnet,**
**dass** die Verweildauer dadurch gesteuert wird, dass mindestens ein Abschnitt (2) des Pufferrohres, welcher einem freien Raum (3, 4, 5) benachbart ist, der an ein Kühlmittel (9) anschließbar ist, in einer oder mehreren Kühlstufen in Betrieb gesetzt wird.

6. Verfahren nach Anspruch 5,
**dadurch gekennzeichnet,**
**dass** der Strom des Lebensmittelprodukts während einer Betriebsperiode zwischen einer oder mehreren Kapazitäten umschaltbar ist.

7. Verfahren nach einem der Ansprüche 5 bis 7,
**dadurch gekennzeichnet,**
**dass** die Verweildauer in dem Pufferrohr an die Konsistenz oder an den Teilchengehalt des Lebensmittelprodukts bei einer gegebenen Strömungskapazität angepasst wird.

## Revendications

1. Appareil de traitement thermique d'un courant de produit alimentaire pompable, comprenant:
une ou plusieurs unités de préchauffage et de chauffage du produit alimentaire à une température prédéterminée,
un tube tampon, par lequel s'écoule ledit produit alimentaire et dans lequel la température prédéterminée est maintenue pour une période de séjour prédéterminée, et
un ou plusieurs condenseurs,
**caractérisé en ce**
**qu'**au moins un tronçon (2) dudit tube tampon est adjacent à un espace ou entouré par cet espace, et en ce que ledit espace est apte à être relié à un agent réfrigérant (9), ce qui permet une commutation à cet au moins deuxième tronçon (2) dudit tube tampon en tant que tube tampon ou en tant que condenseur.

2. Dispositif selon la revendication 1,
**caractérisé en ce**
**que** ledit tronçon (2) dudit tube tampon est composé par au moins une partie (3, 4, 5) d'une tubulure cylindrique à double chemise, qui est apte à être reliée à un agent réfrigérant (9).

3. Dispositif selon la revendication 2,
**caractérisé en ce**
**que** lesdites parties (3, 4, 5) dudit tube tampon sont conçues d'une manière, qu'on puisse les relier par étapes et en succession audit agent réfrigérant (9).

4. Dispositif selon la revendication 1,
**caractérisé en ce**
**qu'**un premier tronçon (1) dudit tube tampon est composé d'un serpentin cylindrique, et
en ce que des détecteurs de température (16, 17, 18) sont disposés entre les parties respectives (3, 4, 5) à détecter la température à l'extrémité dudit premier tronçon (1).

5. Procédé de traitement thermique en continu d'un courant d'un produit alimentaire pompable, comprenant:
préchauffage et chauffage dudit produit alimentaire à une température prédéterminée,
tenir ladite température prédéterminée pour une période de séjour à l'intérieur d'un tube tampon, et
refroidir ensuite le produit alimentaire,
**caractérisé en ce**
**que** la période de séjour est commandée par la mesure, qu'au moins un tronçon (2) dudit tube tampon, qui est adjacent à un espace (3, 4, 5), qui est apte à être relié à un agent réfrigérant (9), est mis en opération à un ou plusieurs étages de refroidissement.

6. Procédé selon la revendication 5,
**caractérisé en ce**
**que** ledit courant du produit alimentaire peut être commuté entre une ou plusieurs capacités au cours d'une période d'opération.

7. Procédé selon une quelconque des revendications 5 à 7,
**caractérisé en ce**
**que** la période de séjour dans ledit tube tampon est adaptée à la consistance ou à la teneur en particules dudit produit alimentaire à une capacité de courant donnée.
